# FASCICULE DE BREVET EUROPEEN

(11) **EP 3 721 204 B1**
(45) Date de publication et mention de la délivrance du brevet: **09.02.2022**
(21) Numéro de dépôt: 18833087.2
(22) Date de dépôt: 03.12.2018
(51) Int. Cl.: G01N 1/38, B01F 3/20, G01N 35/10, G01N 35/00

(54) **DISPOSITIF DE PRÉPARATION DE RÉACTIF POUR DISPOSITIFS D'ANALYSE DE PARTICULES**
VORRICHTUNG ZUR VORBEREITUNG VON REAGENZIEN FÜR TEILCHENANALYSEVORRICHTUNGEN
DEVICE FOR PREPARING REAGENT FOR PARTICLE ANALYSIS DEVICES

(30) Priorité: 04.12.2017 FR 1761596
(43) Date de publication de la demande: 14.10.2020
(73) Titulaire: Horiba ABX SAS, 34184 Montpellier Cedex 4 (FR)
(72) Inventeur: THORAVAL, Coralie, 34090 Montpellier (FR)
(74) Mandataire: Cabinet Netter
(86) Numéro de dépôt international: PCT/FR2018/053077
(87) Numéro de publication internationale: WO 2019/110898

(56) Documents cités:
- WO-A1-2017/118696
- US-A1- 2010 248 208
- US-A1- 2011 223 077
- US-B2- 9 063 101

## Description

L'invention concerne le domaine des dispositifs médicaux de diagnostic in vitro et plus précisément de la préparation de réactif.

La gestion optimale du flux des échantillons est devenue un élément important dans l'organisation des laboratoires. Plus un laboratoire est grand, plus cette optimisation devient complexe et critique. Deux critères sont particulièrement importants à considérer : le temps de traitement des échantillons (également appelé TAT pour Turn Around Time en anglais) et la charge de travail que chaque action induit sur le personnel de laboratoire (communément mesuré en FTE pour Full Time Equivalent en anglais).

L'approvisionnement en réactif influence ces deux paramètres, ainsi que l'impact carbone (transport des cubitainers), les coûts de stockage et les procédures d'achat. Dans les laboratoires modernes, le réactif est souvent contenu dans de grands récipients appelés cubitainers, qui sont directement reliés aux analyseurs.

Le réactif est classiquement utilisé notamment pour diluer et préparer les échantillons, comme solution de gainage en cytométrie en flux, ou comme solution de rinçage dans l'analyseur et l'étaleur de lame.

Les cubitainers sont lourds et imposants et doivent être changés régulièrement par le personnel lorsqu'ils sont vides. Les cubitainers de réactif dilué étant composés d'environ 80% d'eau, des préparateurs de réactif ont été développés afin de changer moins souvent ces cubitainers en les remplissant avec du réactif dilué produit à partir de réactif concentré et d'eau disponible sur place dans le laboratoire.

Ainsi, certains dispositifs de préparation sur le marché utilisent un système de reconstitution extérieur aux analyseurs à partir d'un cubitainer de réactif concentré en x25. Le dispositif de préparation distribue ensuite le réactif aux appareils.

Le réactif doit présenter des caractéristiques précises afin de ne pas fausser les mesures des appareils dans lequel il est utilisé. Pour cette raison, il est crucial que les dispositifs de préparation produisent un réactif qui présente la concentration recherchée de manière fiable. Or l'eau ou le diluant utilisé et le réactif concentré présentent souvent des températures différentes, températures qui peuvent d'ailleurs grandement varier selon les laboratoires et méthodes de travail. Ces écarts sont sources d'erreurs liées à la dilatation des volumes des solutions en fonction de la température dans les systèmes de dosage. En effet, pour une même quantité d'un même liquide, le volume de celui-ci peut être différent en fonction de la température. Pour contourner ce problème et d'autres sources d'erreur sur le dosage, les dispositifs existants se basent sur un panel de mesures physiques afin de valider la dilution réalisée dans le dispositif de préparation telle la conductivité et le pH.

La conductivité constitue le paramètre le plus représentatif de la concentration d'une solution conductrice. De plus, la mesure de conductivité est une méthode facile à mettre en place et adaptée à un processus de mesure continu.

Ainsi, les dispositifs existants, tel que le système divulgué dans le brevet EP1832879A2 divulguant un appareil de fourniture de réactif pour fournir un réactif à un analyseur, comme décrit dans le préambule de la revendication 1, sont des systèmes régulés agencés pour maintenir une consigne de conductivité dans le réactif produit. La conductivité est mesurée au sein d'un réservoir et est comparée à une valeur de référence. Puis le système ajoute petit à petit de l'eau /diluant et/ou du réactif concentré jusqu'à obtention de la conductivité cible. Les dispositifs existants utilisent donc une boucle de régulation permettant d'ajuster les volumes d'eau et/ou de réactif concentré jusqu'à ce que la solution atteigne la conductivité cible.

Ce fonctionnement présente néanmoins plusieurs inconvénients. Tout d'abord, il est nécessaire d'attendre la stabilisation de la mesure de conductivité. La conception actuelle des sondes de conductivité ne permet pas de répondre à des variations rapides de température de la solution (indirectement de conductivité) dans le cas de l'utilisation d'une boucle de régulation. Le temps de réponse des conductivimètres et leur précision de mesure ne permettent donc pas d'offrir une boucle de régulation rapide avec un ajustement selon la mesure de conductivité.

En effet, certains dispositifs sont paramétrés pour tenir compte de situations extrêmes. Pour ne pas fournir trop de quantité de matière de diluant initial (dans le cas d'un diluant froid et un réactif chaud), il est par exemple programmé dans la boucle de régulation une quantité de diluant faible au démarrage. Ceci permet d'éviter de ne pas pouvoir atteindre la cible de conductivité, mais au prix d'une grande perte de temps.

Ensuite, dans le cas d'une mesure de conductivité statique, cette dernière n'est pas représentative de l'ensemble du volume reconstitué. Ainsi, une hétérogénéité de la préparation est difficilement détectable. Pour pallier cela, une boucle de recirculation du volume du réactif reconstitué est souvent mise en place mais cela rallonge encore le temps de reconstitution du réactif. Une sonde de conductivité en flux peut être intégrée à cette boucle de recirculation. Cependant lorsqu'il y a un écart important de température entre celle de l'eau et du concentré, l'homogénéisation en température du mélange est long et peut être inefficace. Par conséquent, le risque est que le mélange ne soit pas homogène impactant sur la précision de la mesure de la conductivité.

De plus, il s'agit d'un processus encombrant qui nécessite un réservoir tampon au sein du dispositif de préparation. En effet, pour mesurer la conductivité, le réservoir doit être rempli et ensuite, si besoin une régulation est opérée en fonction de la mesure de conductivité. En attendant que cette régulation soit opérée, la solution n'est pas disponible et ne peut donc être fournie aux dispositifs du laboratoire. De ce fait il est nécessaire d'avoir un réservoir supplémentaire avec du réactif reconstitué pour permettre aux dispositifs du laboratoire d'être approvisionnés en permanence.

Outre la nature de la mesure de conductivité, le procédé de reconstitution selon une boucle de régulation reste un processus long et séquentiel. En effet, des étapes supplémentaires doivent être prévues ajoutant une complexité supplémentaire.

L'invention vient améliorer la situation.

A cet effet, l'invention propose un dispositif de préparation de réactif pour dispositifs d'analyse de particules, comprenant une entrée pour du diluant, une entrée pour du réactif concentré, un premier circuit relié à l'entrée pour du diluant, un deuxième circuit relié à une entrée pour du réactif concentré, et un mélangeur relié au premier circuit et au deuxième circuit et agencé pour produire un réactif en mélangeant du diluant et du réactif concentré.

Ce dispositif comprend en outre un échangeur de chaleur relié au premier circuit et au deuxième circuit, en amont du mélangeur et en aval de l'entrée pour du diluant et de l'entrée pour du réactif concentré et agencé pour réaliser un échange thermique entre du diluant du premier circuit et du réactif concentré du deuxième circuit.

Ce dispositif est particulièrement avantageux car il permet de s'affranchir des boucles de régulation utilisées dans les dispositifs connus, ainsi que des conductivimètres que ces boucles utilisent. Cela permet de gagner beaucoup de temps de préparation, et donc d'efficacité.

En variante, le dispositif pourra présenter une ou plusieurs des caractéristiques suivantes :
- l'échangeur de chaleur présente une entrée pour du diluant reliée à l'entrée pour du diluant du dispositif, une entrée pour du réactif concentré reliée à l'entrée pour du réactif concentré du dispositif, une sortie pour du diluant reliée à une entrée du mélangeur, et une sortie pour du réactif concentré reliée à une autre entrée du mélangeur,
- l'échangeur de chaleur comprend une chambre principale recevant le diluant et un tuyau agencé à l'intérieur de la chambre principale et recevant le réactif concentré,
- le tuyau est un serpentin et/ou dans lequel l'échangeur de chaleur comprend des ailettes,
- l'échangeur de chaleur présente une entrée pour du diluant reliée à l'entrée pour du diluant du dispositif formant une entrée du mélangeur, une entrée pour du réactif concentré reliée à l'entrée pour du réactif concentré du dispositif, et une sortie pour du réactif concentré reliée à l'entrée du mélangeur,
- le premier circuit comprend un agencement de pompe disposé entre l'échangeur de chaleur et le mélangeur,
- le deuxième circuit comprend un agencement de pompe disposé entre l'échangeur de chaleur et le mélangeur,
- l'agencement de pompe comprend un ou plusieurs des éléments choisis dans le groupe comprenant au moins une pompe à membrane et une seringue, et
- le mélangeur comprend un système d'agitation choisi dans le groupe comprenant une pale entraînée par un moteur, un agitateur statique et une boucle de recirculation.

L'invention concerne également un procédé de préparation de réactif comprenant les opérations suivantes :
- recevoir du diluant et du réactif concentré,
- réaliser un échange de chaleur entre le diluant et le réactif concentré, et
- réaliser un mélange volumique du diluant et du réactif concentré pour produire un réactif dilué.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente un schéma de principe d'un dispositif selon l'invention,
- la figure 2 représente un premier mode de réalisation du dispositif de la figure 1, et
- la figure 3 représente un deuxième mode de réalisation du dispositif de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Dans les exemples décrits ci-après, les dispositifs d'analyses sont du type analyseur biologique, par exemple pour la préparation, le comptage et/ou l'identification de particules. On entend par particule tout produit pouvant faire l'objet d'analyse et nécessitant, dans le cadre de cette analyse, l'utilisation d'au moins un réactif. Sont notamment des particules : des cellules sanguines, des cristaux ou d'autres molécules composant l'urine.

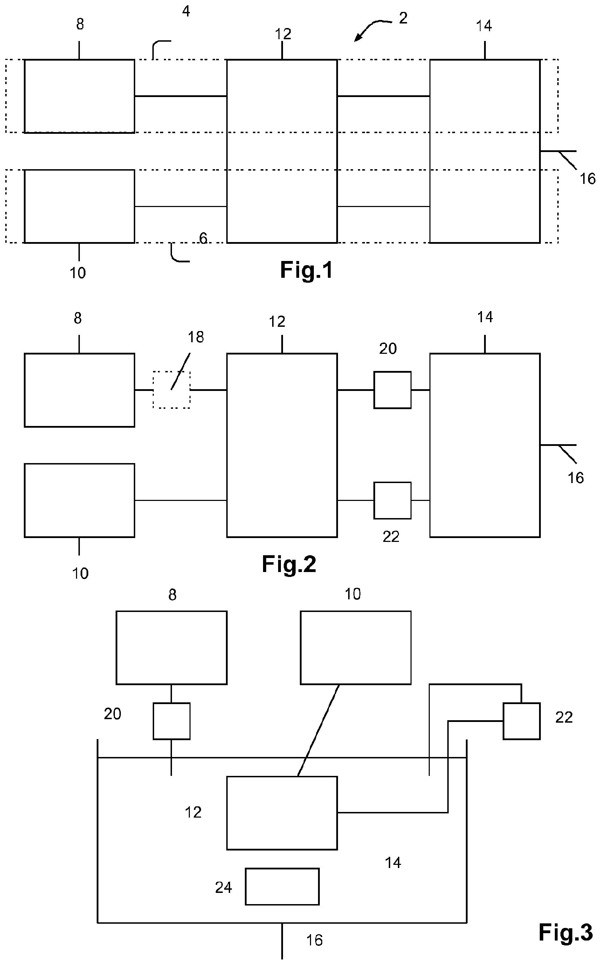

La figure 1 représente une vue de principe de la circulation fluidique d'un dispositif de préparation de réactif 2 selon l'invention. Dans l'exemple représenté sur les figures 2 et 3, le dispositif de préparation de réactif 2 est une unité totalement séparée des autres dispositifs du laboratoire, auxquels il peut être relié fluidiquement pour fournir du réactif. Néanmoins, il apparaît clairement de ce qui suit que ce dispositif pourrait être intégré complètement à l'intérieur d'un analyseur biologique, soit en étant entièrement intégré à celui-ci, soit en formant un sous-ensemble modulaire de celui-ci.

Le dispositif de préparation de réactif 2 comprend un premier circuit 4, un deuxième circuit 6, une entrée pour un premier liquide qui sera dans cet exemple de l'eau osmosée 8, une entrée pour un second liquide qui sera dans cet exemple du réactif concentré 10, un échangeur de chaleur 12, un mélangeur 14 et une sortie de réactif 16.

Le premier circuit 4 est dédié à la circulation d'eau servant à diluer du réactif concentré en vue d'obtenir un réactif à concentration cible en sortie. Ainsi, le premier circuit 4 est relié à l'entrée pour de l'eau osmosée 8. L'entrée pour de l'eau osmosée 8 peut être une ouverture reliée à une source de diluant telle qu'une centrale de production de diluant, ou être un cubitainer de diluant, ou être un récipient quelconque relié à une source de diluant. Dans ce qui suit, il sera fait référence à des exemples dans lequel le diluant est de l'eau osmosée, mais l'eau osmosée pourrait être remplacée par un autre diluant.

Le deuxième circuit 6 est dédié à la circulation de réactif concentré destiné à être dilué pour obtenir le réactif à concentration cible en sortie. Ainsi, le deuxième circuit 6 est relié à l'entrée pour du réactif concentré 10. L'entrée pour du réactif 10 peut être une ouverture reliée à une source de réactif concentré, ou être un cubitainer de réactif concentré, ou être un récipient quelconque relié à une source de réactif concentré.

Le premier circuit 4 et le deuxième circuit 6 sont tous les deux reliés à l'échangeur de chaleur 12, de sorte que celui-ci permet un échange de chaleur entre de l'eau osmosée et du réactif concentré.

L'échangeur de chaleur 12 est disposé en amont du mélangeur 14, de sorte que le mélange réalisé par le mélangeur 14 se fait entre de l'eau osmosée issue du premier circuit 4 et du réactif concentré issu du deuxième circuit 6 qui ont échangé de la chaleur au sein de l'échangeur de chaleur 12.

Ainsi, quelle que soit la température de l'eau osmosée à l'entrée pour de l'eau osmosée 8 et la température du réactif concentré à l'entrée pour du réactif concentré 10, l'eau osmosée et le réactif concentré qui sont dosés à une température proche pour être ensuite mélangés dans le mélangeur 12.

Cela est très avantageux. En effet, la Demanderesse a découvert que, lorsque l'eau osmosée et le réactif concentré ont des températures suffisamment proches, il est possible de réaliser un mélange volumique avec une précision suffisante tout en s'affranchissant de l'utilisation d'une boucle de régulation selon la conductivité. En effet, les dispositifs de l'art antérieur utilisent une boucle de régulation afin d'obtenir un mélange eau osmosée et réactif concentré à une température suffisamment stable avant de pouvoir réaliser la mesure de la conductivité.

La figure 2 représente un premier mode de réalisation du dispositif de préparation de réactif de la figure 1.

Dans ce mode de réalisation, chaque élément décrit avec la figure 1 est réalisé par un élément distinct.

Ainsi, l'entrée pour de l'eau osmosée 8 est dans l'exemple décrit ici, une centrale d'eau produisant de l'eau pure de Type 2 de qualité supérieure et constante à partir d'eau potable du robinet. Elle permet en outre l'élimination de particules et colloïdes, du chlore libre et de la dureté avant la purification par osmose inverse (O.I.). Elle permet l'élimination des ions jusqu'à atteindre, par exemple une résistivité de préférence supérieure à 1 MΩ•cm (à 20 °C).

La centrale d'eau peut être associée à un réservoir de stockage. La conception du réservoir préserve la pureté de l'eau stockée. L'eau peut être prélevée du réservoir par une pompe de distribution. En variante, dans le cas où la qualité d'eau potable n'est pas suffisante pour obtenir de l'eau pure de type 2, le système peut fonctionner avec un cubitainer d'eau osmosée de type 1.

L'eau osmosée est stockée dans un réservoir du dispositif de préparation de réactif 2, et est dans l'exemple décrit ici chauffée ou refroidie au moyen d'un élément 18 afin que l'eau osmosée présente une température comprise entre 10°C et 40°C, et de préférence entre 15°C et 30°C, en entrée de l'échangeur de chaleur 12. En variante, l'élément 18 peut être omis. L'eau peut également être chauffée ou refroidie à une température de consigne correspondant à la température des éléments de dosages (pompes ou seringues) par exemple à l'aide de capteur de température sur ces éléments. En effet, lorsque le dosage est réalisé, la température de l'eau osmosée et/ou du réactif concentré peut être très différente de celle des éléments de dosage. Ainsi, en chauffant ou refroidissant l'eau à la température des éléments de dosage, une précision encore accrue est atteinte.

Le réservoir d'eau osmosée peut comprendre un capteur de température et un ou plusieurs capteurs de niveau. Les capteurs de niveau définissent le niveau maximal à atteindre pour le remplissage du réservoir. En variante, le réservoir peut être fait d'un matériau ayant une résistance thermique faible pour éviter un système de chauffe.

L'entrée pour du réactif concentré 10 est dans l'exemple décrit ici réalisée par un cubitainer de réactif concentré dont la concentration est x25. Une canne d'aspiration munie d'un flotteur permet le raccordement dans le cubitainer avec le deuxième circuit 6. Le flotteur permet de renseigner l'atteinte du niveau bas du cubitainer. En variante, la canne d'aspiration peut également être munie d'un clapet anti-retour afin de ne pas désamorcer la ligne de concentré. Pour aller du cubitainer à l'échangeur de chaleur 12, le réactif concentré est directement aspiré par une ou plusieurs pompes à membrane. D'autres agencements pourraient être utilisés pour faire circuler le réactif concentré dans le deuxième circuit 10.

Dans l'exemple décrit ici, l'échangeur de chaleur 12 est un échangeur de chaleur fluide/fluide dont une entrée est reliée au premier circuit 4 et se déverse dans une chambre principale, qui est traversée par un tuyau de diamètre faible relié à une entrée reliée au deuxième circuit 6.

Le taux de transfert thermique entre deux fluides à un endroit dans un échangeur dépend de l'amplitude de la différence de température à cet endroit, qui varie le long de l'échangeur.

Par exemple, dans un échangeur de chaleur concentrique, avec au centre un fluide froid et entouré de fluide chaud, la chaleur est transférée du fluide chaud à la paroi par convection, à travers la paroi via de la conduction et finalement de la paroi au fluide froid par convection. Cet échange dépend du coefficient de transmission thermique surfacique moyen de la paroi, des chaleurs spécifiques des liquides et de leurs débits massiques.

En variante, l'échangeur de chaleur 12 pourrait renfermer par exemple un serpentin dans la chambre principale. Ce serpentin reçoit le réactif concentré et permet d'offrir une plus grande surface d'échange de chaleur. Toujours en variante, l'échangeur de chaleur 12 pourrait également présenter des ailettes, toujours en vue d'augmenter la surface d'échange de chaleur. L'échangeur 12 pourrait également avoir des ailettes avec l'extérieur pour être mis à la température ambiante.

En sortie de l'échangeur de chaleur 12, le premier circuit 4 comprend un agencement de pompe 20 et le deuxième circuit 6 comprend un agencement de pompe 22. L'agencement de pompe 20 décrit ici est avantageusement composé d'une pluralité de pompes à membrane dont le débit total peut être compris entre 1 et 10 mL.s⁻¹, préférentiellement 3,5 mL.s⁻¹, et d'une ou plusieurs pompes ajustables en volume ce qui permet de lisser les erreurs de justesse de chaque pompe et d'alimenter le mélangeur 14 avec précision. En variante, des seringues pourraient être utilisées, ou tout autre élément approprié permettant de prélever avec précision de l'eau pour l'introduire dans le mélangeur 14. Toujours en variante, une unique pompe sert à alimenter le mélangeur 14.

L'agencement de pompe 20 et l'agencement de pompe 22 sont combinés pour introduire dans le mélangeur 14 une quantité d'eau osmosée et de réactif concentré dont les températures ont été harmonisées par l'échangeur de chaleur 12 dans un rapport volumique correspondant à la concentration souhaitée pour le réactif à la sortie 16. Par exemple, l'agencement de pompe 20 et l'agencement de pompe 22 peuvent être activés de manière synchrone, asynchrone ou parallèle. En particulier dans le cas de l'activation synchrone, un avantage obtenu est le maintien de la conductivité cible pour le réactif à la sortie 16.

Dans l'exemple décrit ici, le mélangeur 14 comprend une chambre de mélange comprenant un capteur de niveau haut et un capteur de niveau bas et un système d'agitation. Le système d'agitation est ici une pale qui est animée par un moteur pendant une durée prédéterminée. En variante, le système d'agitation pourrait être réalisé au moyen d'une boucle de recirculation du réactif produit comprenant un filtre optionnel et une pompe du type pompe à membrane ou centrifuge. Toujours en variante, un agitateur statique pourrait être utilisé.

Grâce à ce dispositif, le réactif est réalisé à partir d'une pure dilution volumique, sans boucle de rétroaction ni autre équipement complexe nécessitant des tests pouvant ralentir la production de réactif. Ainsi le dispositif de préparation de réactif de l'invention est particulièrement avantageux car il est plus simple, fiable, rapide et occupe moins de place, nécessite moins de maintenance tout en offrant un meilleur rendement.

La figure 3 représente un deuxième mode de réalisation du dispositif selon l'invention. Dans ce deuxième mode de réalisation, l'objectif poursuivi est d'augmenter encore la compacité du dispositif de préparation de réactif 2.

Pour cela, l'échangeur de chaleur 12 et le mélangeur 14 sont partiellement combinés. Pour cela, la chambre principale de l'échangeur de chaleur 12 qui reçoit l'eau osmosée est également la chambre de mélange du mélangeur 14.

Ainsi, l'agencement de pompe 20 du premier circuit 4 introduit le volume d'eau osmosée nécessaire. Dans l'exemple décrit ici, l'agencement de pompe 20 est une pompe à membrane telle que décrite plus haut. En variante, une pluralité de pompes à membranes pourrait être utilisée. Une variante consisterait à employer des blocs seringue ou encore à utiliser à la fois des pompes à membrane et des blocs seringues.

L'échangeur de chaleur 12 comprend au moins un serpentin qui est relié à l'entrée pour du réactif concentré 8. Le serpentin est plongé dans la chambre de mélange, de sorte que celui-ci est immergé dans une grande masse d'eau osmosée. Le serpentin sort ensuite de la chambre de mélange, où il est relié à l'agencement de pompe 22 qui est dans l'exemple décrit ici une pompe à membrane telle que décrite plus haut. La sortie de l'agencement de pompe 22 est relié à l'entrée de la chambre de mélange, de sorte que le réactif concentré qui a échangé de la chaleur avec l'eau osmosée dans l'échangeur de chaleur 12 est introduit dans celle-ci pour le mélange par une pale 24 disposée en partie basse. En variante, la chambre de mélange pourrait comprendre un mélangeur statique. En variante, la chambre de mélange pourrait recevoir un élément pour chauffer ou refroidir l'eau dans la chambre de mélange.

Comme on l'a vu plus haut, le dispositif de l'invention peut être intégré dans un analyseur biologique ou être un dispositif indépendant. Dans tous les cas, il sera relié à un moment à un analyseur biologique.

## Revendications

1. Dispositif de préparation de réactif pour dispositifs d'analyse de particules, comprenant une entrée pour du diluant (8), une entrée pour du réactif concentré (10), un premier circuit (4) relié à l'entrée pour du diluant (8), un deuxième circuit (6) relié à une entrée pour du réactif concentré (10), et un mélangeur (14) relié au premier circuit (4) et au deuxième circuit (6) et agencé pour produire un réactif en mélangeant du diluant et du réactif concentré, **caractérisé en ce qu'**il comprend en outre un échangeur de chaleur (12) relié au premier circuit (4) et au deuxième circuit (6), en amont du mélangeur (14) et en aval de l'entrée pour du diluant (8) et de l'entrée pour du réactif concentré (10) et agencé pour réaliser un échange thermique entre du diluant du premier circuit (4) et du réactif concentré du deuxième circuit (6).

2. Dispositif selon la revendication 1, dans lequel l'échangeur de chaleur (12) présente une entrée pour du diluant reliée à l'entrée pour du diluant du dispositif (8), une entrée pour du réactif concentré reliée à l'entrée pour du réactif concentré du dispositif (10), une sortie pour du diluant reliée à une entrée du mélangeur (14), et une sortie pour du réactif concentré reliée à une autre entrée du mélangeur (14).

3. Dispositif selon la revendication 2, dans lequel l'échangeur de chaleur (12) comprend une chambre principale recevant le diluant et un tuyau agencé à l'intérieur de la chambre principale et recevant le réactif concentré.

4. Dispositif selon la revendication 3, dans lequel le tuyau est un serpentin et/ou dans lequel l'échangeur de chaleur (12) comprend des ailettes.

5. Dispositif selon la revendication 1, dans lequel l'échangeur de chaleur (12) présente une entrée pour du diluant reliée à l'entrée pour du diluant du dispositif (8) formant une entrée du mélangeur (14), une entrée pour du réactif concentré reliée à l'entrée pour du réactif concentré du dispositif (10), et une sortie pour du réactif concentré reliée à l'entrée du mélangeur (14).

6. Dispositif selon l'une des revendications précédentes, dans lequel le premier circuit (4) comprend un agencement de pompe (20) disposé entre l'échangeur de chaleur (12) et le mélangeur (14).

7. Dispositif selon l'une des revendications précédentes, dans lequel le deuxième circuit (6) comprend un agencement de pompe (22) disposé entre l'échangeur de chaleur (12) et le mélangeur (14).

8. Dispositif selon la revendication 6 ou 7, dans lequel l'agencement de pompe (20, 22) comprend un ou plusieurs des éléments choisis dans le groupe comprenant au moins une pompe à membrane et une seringue.

9. Dispositif selon l'une des revendications précédentes, dans lequel le mélangeur (14) comprend un système d'agitation choisi dans le groupe comprenant une pale entraînée par un moteur, un agitateur statique et une boucle de recirculation.

10. Procédé de préparation de réactif utilisant le dispositif selon l'une des revendications 1-9 et comprenant les opérations suivantes :
- recevoir du diluant et du réactif concentré,
- réaliser un échange de chaleur entre le diluant et le réactif concentré, et
- réaliser un mélange volumique du diluant et du réactif concentré pour produire un réactif dilué.

## Patentansprüche

1. Vorrichtung zur Reagenzvorbereitung für Teilchenanalysevorrichtungen, umfassend einen Einlass für Verdünnungsmittel (8), einen Einlass für konzentriertes Reagenz (10), einen ersten Kreislauf (4) verbunden mit dem Einlass für Verdünnungsmittel (8), einen zweiten Kreislauf (6) verbunden mit einem Einlass für konzentriertes Reagenz (10) und einen Mischer (14), der mit dem ersten Kreislauf (4) und dem zweiten Kreislauf (6) verbunden ist und eingerichtet ist, um ein Reagenz durch Mischen von Verdünnungsmittel und konzentriertem Reagenz herzustellen, **dadurch gekennzeichnet, dass** sie ferner einen Wärmetauscher (12) umfasst, der mit dem ersten Kreislauf (4) und dem zweiten Kreislauf (6) verbunden ist, stromaufwärts des Mischers (14) und stromabwärts des Einlasses für Verdünnungsmittel (8) und des Einlasses für konzentriertes Reagenz (10), und eingerichtet ist, um einen Wärmeaustausch zwischen Verdünnungsmittel des ersten Kreislaufs (4) und konzentriertem Reagenz des zweiten Kreislaufs (6) durchzuführen.

2. Vorrichtung nach Anspruch 1, wobei der Wärmetauscher (12) einen Einlass für Verdünnungsmittel aufweist, der mit dem Einlass für Verdünnungsmittel der Vorrichtung (8) verbunden ist, einen Einlass für konzentriertes Reagenz, der mit dem Einlass für konzentriertes Reagenz der Vorrichtung (10) verbunden ist, einen Auslass für Verdünnungsmittel, der mit einem Einlass des Mischers (14) verbunden ist, und einen Auslass für konzentriertes Reagenz, der mit einem anderen Einlass des Mischers (14) verbunden ist.

3. Vorrichtung nach Anspruch 2, wobei der Wärmetauscher (12) eine Hauptkammer umfasst, die das Verdünnungsmittel aufnimmt, und eine Röhre, die innerhalb der Hauptkammer eingerichtet ist und das konzentrierte Reagenz aufnimmt.

4. Vorrichtung nach Anspruch 3, wobei die Röhre eine Rohrschlange ist und/oder wobei der Wärmetauscher (12) Rippen umfasst.

5. Vorrichtung nach Anspruch 1, wobei, der Wärmetauscher (12) einen Einlass für Verdünnungsmittel aufweist, der mit dem Einlass für Verdünnungsmittel der Vorrichtung (8) verbunden ist, der einen Einlass des Mischers (14) bildet, einen Einlass für konzentriertes Reagenz, der mit dem Einlass für konzentriertes Reagenz der Vorrichtung (10) verbunden ist, und einen Auslass für konzentriertes Reagenz, der mit dem Einlass des Mischers (14) verbunden ist.

6. Vorrichtung nach einem der vorhergehenden Ansprüche, wobei der erste Kreislauf (4) eine zwischen dem Wärmetauscher (12) und dem Mischer (14) angeordnete Pumpenanordnung (20) umfasst.

7. Vorrichtung nach einem der vorhergehenden Ansprüche, wobei der zweite Kreislauf (6) eine zwischen dem Wärmetauscher (12) und dem Mischer (14) angeordnete Pumpenanordnung (22) umfasst.

8. Vorrichtung nach Anspruch 6 oder 7, wobei die Pumpenanordnung (20, 22) eines oder mehrere der Elemente umfasst, die aus der Gruppe ausgewählt wurden, die mindestens eine Membranpumpe und eine Spritze umfasst.

9. Vorrichtung nach einem der vorhergehenden Ansprüche, wobei der Mischer (14) ein Rührwerk umfasst, das aus der Gruppe ausgewählt wurde, die ein von einem Motor angetriebenes Rührblatt, einen statischen Rührer und eine Rezirkulationsschleife umfasst.

10. Verfahren zur Reagenzvorbereitung unter Verwendung der Vorrichtung nach einem der Ansprüche 1-9 und die folgenden Arbeitsgänge umfassend:
- Aufnahme von Verdünnungsmittel und von konzentriertem Reagenz,
- Durchführen eines Wärmeaustauschs zwischen dem Verdünnungsmittel und dem konzentrierten Reagenz, und
- Durchführen einer Volumenmischung des Verdünnungsmittels und des konzentrierten Reagenzes, um ein verdünntes Reagenz herzustellen.

## Claims

1. Reagent preparation device for particle analysis devices, comprising a diluent inlet (8), a concentrated reagent inlet (10), a first circuit (4) connected to the diluent inlet (8), a second circuit (6) connected to a concentrated reagent inlet (10), and a mixer (14) connected to the first circuit (4) and to the second circuit (6) and arranged to produce a reagent by mixing diluent and concentrated reagent, **characterised in that** it further comprises a heat exchanger (12) connected to the first circuit (4) and to the second circuit (6), upstream of the mixer (14) and downstream of the diluent inlet (8) and of the concentrated reagent inlet (10) and arranged to perform heat exchange between diluent of the first circuit (4) and concentrated reagent of the second circuit (6).

2. Device according to claim 1, wherein the heat exchanger (12) has a diluent inlet connected to the diluent inlet of the device (8), a concentrated reagent inlet connected to the concentrated reagent inlet of the device (10), a diluent outlet connected to an inlet of the mixer (14), and a concentrated reagent outlet connected to another inlet of the mixer (14).

3. Device according to claim 2, wherein the heat exchanger (12) comprises a main chamber receiving the diluent and a tube arranged inside the main chamber and receiving the concentrated reagent.

4. Device according to claim 3, wherein the tube is a coil and/or wherein the heat exchanger (12) comprises fins.

5. Device according to claim 1, wherein the heat exchanger (12) has a diluent inlet connected to the diluent inlet of the device (8) forming an inlet of the mixer (14), a concentrated reagent inlet connected to the concentrated reagent inlet of the device (10), and a concentrated reagent outlet connected to the inlet of the mixer (14).

6. Device according to one of the preceding claims, wherein the first circuit (4) comprises a pump arrangement (20) provided between the heat exchanger (12) and the mixer (14)

7. Device according to one of the preceding claims, wherein the second circuit (6) comprises a pump arrangement (22) provided between the heat exchanger (12) and the mixer (14).

8. Device according to claim 6 or 7, wherein the pump arrangement (20, 22) comprises one or more of the elements chosen in the group comprising at least a diaphragm pump and a syringe.

9. Device according to one of the preceding claims, wherein the mixer (14) comprises an agitation system chosen in the group comprising a blade driven by a motor, a static agitator and a recirculation loop.

10. Reagent preparation method using the device according to one of claims 1-9 and comprising the following operations:
- receiving diluent and concentrated reagent,
- performing heat exchange between the diluent and the concentrated reagent, and
- performing a volume mixture of the diluent and the concentrated reagent to produce a diluted reagent.
